# EUROPÄISCHE PATENTSCHRIFT

(11) **EP 1 750 909 B1**
(45) Veröffentlichungstag und Bekanntmachung des Hinweises auf die Patenterteilung: **22.07.2009**
(21) Anmeldenummer: 05759568.8
(22) Anmeldetag: 06.05.2005
(51) Int. Cl.: B25J 9/16, G05B 19/423, G01B 11/00

(54) **VERFAHREN ZUR ROBOTERGESTÜTZTEN VERMESSUNG VON MESSOBJEKTEN**
METHOD FOR ROBOT-ASSISTED MEASUREMENT OF MEASURABLE OBJECTS
PROCÉDÉ DE MESURE ASSISTÉE PAR ROBOT D'OBJETS À MESURER

(30) Priorität: 17.05.2004 DE 102004024378
(43) Veröffentlichungstag der Anmeldung: 14.02.2007
(73) Patentinhaber: KUKA Roboter GmbH, 86165 Augsburg (DE)
(72) Erfinder: VERL, Alexander, 71636 Ludwigsburg (DE)
(74) Vertreter: Barth, Stephan Manuel
(86) Internationale Anmeldenummer: PCT/EP2005/004921
(87) Internationale Veröffentlichungsnummer: WO 2005/115700

(56) Entgegenhaltungen:
- EP-A- 0 312 119
- EP-A- 0 963 816
- EP-B- 1 189 732
- DE-A1- 19 626 459
- DE-A1- 19 931 676
- F. BERTAGNOLLI; R. DILLMANN: "Flexible automated process assurance through non-contact 3d measuring technology" MULTISENSOR FUSION AND INTEGRATION FOR INTELLIGENT SYSTEMS, MFI2003. PROCEEDINGS OF IEEE INTERNATIONAL CONFERENCE ON JULY 30-AUG. 1, 2003, PISCATAWAY, NJ, USA,IEEE, 30. Juli 2003 (2003-07-30), Seiten 27-31, XP010658373 ISBN: 0-7803-7987-X

## Beschreibung

Die vorliegende Erfindung betrifft ein Verfahren zur robotergestützten Vermessung von Objekten und betrifft eine Vorrichtung zur Ausführung des Verfahrens der robotergestützten Vermessung von Objekten.

Obwohl das Verfahren für beliebige Roboter zur Vermessung anwendbar ist, wird die vorliegende Erfindung sowie die ihr zugrunde liegende Problematik in Bezug auf einen Industrieroboter zur Vermessung von Fahrzeugkarosserieteilen erläutert.

Allgemein kommen für die Vermessung von Bauteilen, insbesondere Fahrzeugkarosserieteilen, in der Automobilindustrie zunehmend Industrieroboter zum Einsatz. Diese Roboter sind mit einem beispielsweise optischen Messsystem ausgestattet und können sehr flexibel für komplizierte Messaufgaben, insbesondere an schwer zugänglichen Stellen, eingesetzt werden.

Die Vermessung eines Objekts mit einem bewegten Sensor erfordert, eine Festlegung der Bahnen des Sensors, um aus der Bahn und den Bilddaten des Sensors eine Punktewolke des Messobjekts in einem Weltkoordinatensystem zu erhalten. Deshalb geht in die Qualität der Vermessung des Objekts auch die Qualität der Vermessung bzw. der Reproduzierbarkeit der Bahnen des Sensors ein.

In EP 0 963 816 A2 ist ein Verfahren zur Kompensation von kinematischen Veränderungen eines Roboters beschrieben. Dazu wird der Roboter bei Inbetriebnahme in eine ausreichende Anzahl an unterschiedlichen erstmaliger Posen gefahren und in diesen durch externe Kameras vermessen. Im laufenden Betrieb fährt der Roboter diese Posen erneut an und aus einer erfassten Abweichung der nun angefahrenen Posen zu den erstmaligen Posen wird ein Korrekturwert für ein Robotersteuerungsmodell bestimmt.

In DE 102 35 905 A1 ist ein Verfahren zur Montage eines Werkstückes an einem Objekt mittels eines Roboters beschrieben. An einer Referenzposition wird der Roboter mittels eines Meßsystems relativ zum Weltkoordinatensystem bestimmt und mit einem Bildverarbeitungssystem erfasst. In einer Betriebsphase wird eine Abweichung des Roboters von der Referenzposition mit Hilfe des Bildverarbeitungssystems bestimmt. Basierend auf der Abweichung wird ein Korrekturvektor zur Führung des Roboters zu der Referenzposition bestimmt und an eine Robotersteuerung übermittelt.

In DE 100 48 952 A1 ist ein Verfahren zur Aufnahme von zunächst unbekannten Arbeitspunkten mittels einer Tasteinrichtung und mit mehreren Sensoren, welche an einem zu programmierenden Ort angebracht wird und einen Entfernungsvektor zur momentanen Position einer Referenzeinheit an dem Roboterwerkzeug bestimmt.

Die EP 1 076 221 A2 beschreibt eine Vorrichtung zur robotergesteuerten Vermessung von Objekten. Die Vorrichtung besteht aus einem Roboter mit einer Robotersteuerung, um einen berührungslosen Sensor entlang der Oberfläche eines Objektes zu führen, welcher Bilddaten der Oberfläche des Objektes aufnimmt. Eine Positionsbestimmungseinrichtung bestimmt die Position des berührungslosen Sensors. Ein Synchronisationssignal wird sowohl an den berührungslosen Sensor wie auch die Positionserfassungseinrichtung gesandt, so dass der berührungslose Sensor Bilddaten zu jedem Synchronisationssignal erstellt und die Positionsbestimmungseinrichtung zu jedem Synchronisationssignal die Position des berührungslosen Sensors bestimmt. Eine Bildverarbeitungseinrichtung ermittelt aus den beiden erstellten Datensätzen die Form des Messobjektes.

Der Nachteil der vorgestellten Vorrichtung ist, dass die Positionsbestimmungseinrichtung permanent benötigt wird. Dies ist unter dem Gesichtspunkts des Platzbedarfs wie auch der Kosten der Herstellung einer solchen Vorrichtung nachteilig.

Die Aufgabe der vorliegenden Erfindung besteht darin, ein Verfahren zur robotergestützten Vermessung von Objekten zu schaffen, welche die Positionserfassungseinrichtung nicht permanent benötigt, sowie eine Vorrichtung zur Ausführung des genannten Verfahrens.

Erfindungsgemäß wird diese Aufgabe durch das im Anspruch 1 angegebene Verfahren gelöst.

Das erfindungsgemäße Verfahren weist gegenüber dem bekannten Lösungsansatz den Vorteil auf, dass nur einmal die Absolutkoordinaten der Bahnen des robotergeführten Sensors festgelegt werde müssen. Danach wiederholt der Roboter exakt dieselben Bahnen.

Damit ergeben sich überall dort neue Einsatzgebiete der robotergestützten Vermessung, wo bisher aufgrund von Positionierungsfehlern des Roboters die erforderliche Genauigkeit der Vermessung nicht erreicht werden konnte und/oder wegen der Kosten und dem Platzbedarf keine stationär installierte Positionserfassungseinrichtung verwendet werden.

Die der vorliegenden Erfindung zugrunde liegende Idee besteht darin, dass ein Robotersystem mit einer hohen Wiederholgenauigkeit verwendet wird und die Bahnen des Sensors nur einmalig in einem Weltkoordinatensystem vermessen wird. Dazu werden die notwendigen Bahnen zur Vermessung festgelegt und in die Robotersteuerung eingegeben. Diese führt diese Bahnen aus, welche dann in einem Weltkoordinatensystem vermessen werden. Die Bahn in den Weltkoordinaten wird in einer zweckmäßigen Weise in einer geeigneten Einrichtung so abgespeichert, dass zu jeder Pose des Roboters, während der Sensor die Bahn entlang geführt wird, die Koordinaten des Sensors in dem Weltkoordinatensystem aus dieser Einrichtung auslesbar sind. Für das Führen des Sensors wird ein Roboter verwendet, dessen Wiederholgenauigkeit aufgrund einer Kompensation von externen und/oder internen Einflüssen verbessert ist. Dazu wird nach einem oder mehreren Messungen eine Kompensation durchgeführt. Eine Sensorauswertungsvorrichtung bestimmt aus der abgespeicherten Bahn in den Weltkoordinaten und den Bilddaten des Sensors eine Punktewolke des Messobjekts.

In den Unteransprüchen finden sich vorteilhafte Weiterbildungen und Verbesserungen des in Anspruch 1 angegebenen Verfahrens.

Gemäß einer bevorzugten Weiterbildung wird jedes Mal vor oder nach der Vermessung ein Messobjektes eine Kompensation der internen und/oder externen Einflüssen durchgeführt. Damit wird jedes Messobjekt mit gleichbleibender Genauigkeit vermessen.

Gemäß einer bevorzugten Weiterbildung erfolgt das Festlegen der Bahnen und/oder das Bestimmen der Ist-Bahnen des an dem Roboter geführten Sensors durch eine externe Kalibrierungseinrichtung.

Gemäß einer bevorzugten Weiterbildung vermisst die externe Kalibrierungseinrichtung die Positionen von Markierungen, welche fest oder lösbar angebracht an dem Sensor angebracht sind.

Gemäß einer bevorzugten Weiterbildung wird zum Festlegen der Bahnen des Sensors, das Messobjekt vermessen, indem der Sensor manuell geführt wird und die manuell geführte Bahn des Sensors während des Vermessens mit der externen Positionsbestimmungseinrichtung bestimmt wird. Damit lassen sich langwierige Lernphasen für die Roboterführung einsparen.

Gemäß einer bevorzugten Weiterbildung wird zum Festlegen der Bahnen des Sensors, der Sensor per Hand abgekoppelt vom Roboter oder der Sensor gekoppelt an den Roboters mit einer manuellen Steuerung um das Messobjekt geführt.

Erfindungsgemäß wird zum Kompensieren von externen und/oder internen Einflüssen zur Erhöhung der Wiederholgenauigkeit ein Referenzkörper mit dem mit dem Roboter geführten Sensor vermessen. Aus den Abweichungen einer gemessenen Punktewolke zu einer vorhergehenden gemessenen Punktewolke des Referenzkörpers wird eine Anpassung der Robotersteuerung derart vorgenommen, dass die Änderungen der Kinematik des Roboters kompensiert werden, welche zu den verschiedenen Punktewolken führten. Vorteilhaft ist, dass mit diesem Verfahren eine hohe Wiederholgenauigkeit erreicht wird, ohne dass ein externer Sensor benötigt wird.

Gemäß einer bevorzugten Weiterbildung wird zum Bestimmen der Bahnen des an mit dem Roboter geführten Sensors und/oder Festlegen der Bahnen des Sensors um den Referenzkörper, der Sensor per Hand abgekoppelt vom Roboter oder der Sensor gekoppelt an den Roboter mit einer manuellen Steuerung um den Referenzkörper geführt und die Ist-Bahnen mit der externen Positionsbestimmungseinrichtung aufgezeichnet. Damit lassen sich langwierige Lernphasen für die Roboterführung einsparen.

Gemäß einer bevorzugten Weiterbildung werden die bestimmten Ist-Bahnen des Sensors an die festgelegten Bahnen des Sensors angepasst. Hierbei müssen die Bahnen nicht exakt übernommen werden, sondern es sind auch Glättungen der handgeführten Bahnen möglich.

Gemäß einer bevorzugten Weiterbildung ist der Roboter gegen den externen Einfluss von Temperaturschwankungen auf seine Wiederholgenauigkeit kompensiert. Damit lassen sich vorteilhafter Weise Driften in der Positionierung kompensieren, welche auf Grund der Eigenerwärmung des Roboters entstehen.

Ausführungsbeispiele der Erfindung sind in den Zeichnungen dargestellt und in der nachfolgenden Beschreibung näher erläutert.

Es zeigen:
- Fig. 1: eine schematische Darstellung einer Vorrichtung zum Ausführen einer Initialisierungsphase einer Ausfüh- rungsform der vorliegenden Erfindung;
- Fig. 2: eine schematische Darstellung einer Vorrichtung zum robotergestützten Vermessung;
- Fig. 3: eine schematische Darstellung der Ausführungsform der vorliegenden Erfindung;
- Fig. 4: eine schematische Darstellung zur Erläuterung einer Problematik des Zuordnens der Positionen einer Bahn des Sensors S in Roboterkoordinaten zu den realen Weltkoordinaten für jeden Messpunkt der Punktewolke des Messobjekts;
- Fig. 5: eine schematische Darstellung als Flussdiagramm der Schritte der Ausführungsform der vorliegenden Erfin- dung zum robotergestützten Vermessen eines Messob- jekts; und
- Fig. 6: eine schematische Darstellung als Flussdiagramm der Schritte einer Ausführungsform einer Initialisierungs- phase.

In den Figuren bezeichnen gleiche Bezugszeichen gleiche oder funktionsgleiche Komponenten.

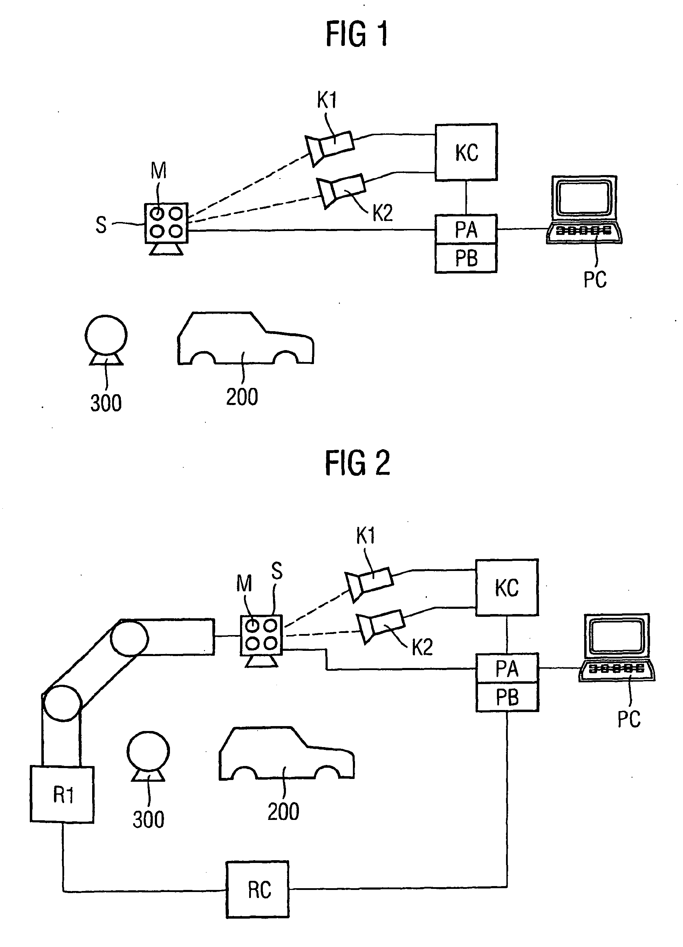

In Fig. 1 ist eine schematische Darstellung einer Vorrichtung zum Ausführen einer Initialisierungsphase einer Ausführungsform der vorliegenden Erfindung, mit einem Messobjekt 200; einem Referenzkörper 300; einem berührungslosen Sensor S; mit Markierungen M, welche an dem Sensor S befestigt sind; einer Sensorverarbeitungseinrichtung PA; einer Sensorsteuerungseinrichtung PB; einem Ausgabeterminal PC; einer Kalibrationsvorrichtung bestehend aus einer oder mehreren Kameras K1, K2 und einer Kamerasteuerungs- und Auswertungseinrichtung KC. Der Sensor S wird manuell um das Messobjekt 200 und den Referenzkörper 300 geführt. Die Kalibrierungsvorrichtung K1, K2, KC vermisst die Positionen der Markierungen M in einem Weltkoordinatensystem. Aus den Positionen der Markierungen M, welche an dem Sensor S befestigt sind, wird die Position und Orientierung des Sensors S, also die Bahn des Sensors S bestimmt. Die Bilddaten des Sensors S werden zusammen mit der Bahn des Sensors S von der Sensorverarbeitungsvorrichtung PA verarbeitet und die errechnete Punktewolke des Messobjekts 200 und des Referenzkörpers 300 sofort auf dem Ausgabeterminal PC ausgegeben. Dies ermöglicht eine intuitive Bedienung des Sensors S, da der Benutzer unmittelbar erkennen kann, welche Auswirkungen die handgeführte Bahn des Sensors S auf die Erfassung der Punktewolke des Messobjekts 200 und des Referenzkörpers 300 hat. Die handgeführte Bahn wird abgespeichert und dient später als Vorlage für eine robotergeführte Bahn.

Die Verarbeitung der Bilddaten des Sensors S mit der Bahn des Sensors S erfolgt derart, dass zu jedem Messpunkt der Bilddaten die Position und Orientierung des Sensors S zugeordnet werden, die der Sensor S zur Aufnahme des Messpunktes einnahm. Die Messpunkte sind in dem lokalen Koordinatensystem des Sensors S aufgenommen, da dieses lokale Koordinatensystem mit dem Sensor bewegt wird, ist eine Transformation aller Messpunkte aus dem lokalen in das feste Weltkoordinatensystem notwendig. Diese Transformation zwischen den beiden Koordinatensystemen basiert auf der Bahn des Sensors S und grundlegenden geometrischen Beziehungen.

Fig. 2 zeigt eine schematische Darstellung einer Vorrichtung zum robotergestützten Vermessung des Messobjektes 200 und des Referenzkörpers 300 mit dem Roboter R1, an dessen Roboterflansch R3 der Sensors S befestigt ist und der Robotersteuerung RC. Die Robotersteuerung RC steuert den Roboterflansch R3 entlang einer Bahn, welche in der Robotersteuerung RC im Roboterkoordinatensystem festgelegt ist. Für die Verarbeitung der Bilddaten des Sensors S wird wie im Fall der manuellen Führung die Bahn des Sensors S benötigt. Dazu bestimmt die Positionsbestimmungseinrichtung K1, K2, KC die Bahn des Sensors S.

Die Bahn des Sensors S zum Vermessen eines Messobjekts 200 und eines Referenzkörpers 300 kann auf mehrere Weisen gewonnen werden. Ein erfindungsgemäßes Verfahren ist den Sensor S per Hand um das Messobjekt 200 und das Referenzkörper 300 zu führen, wie dies in Fig. 1 dargestellt ist und die handgeführte Bahn dann als Vorlage für eine robotergeführte Bahn zu nutzen. Dazu wird die handgeführte Bahn in eine Darstellung im Roboterkoordinatensystem übertragen und die Darstellung in die Robotersteuerung RC eingeben. Die handgeführte Bahn kann noch korrigiert werden, um z.B. Schwankungen des handgeführten Sensors S, welches bei der manuellen Führung mit aufgezeichnet wurden, durch Glätten der Bahn zu reduzieren. Ansonsten soll die robotergeführten Bahn, soweit die Kinematik und der Aufbau des Roboters dies erlauben, der aufgezeichneten handgeführten Bahn entsprechen.

Es gibt mehrere Möglichkeiten zu den Bilddaten des Sensors S die korrespondierende Bahn des robotergeführten Sensors S zu bestimmen. Eine Methode ist, zu jedem Messpunkt die Position und Orientierung des Sensors S zu bestimmen. Dies erfordert aber die Positionsbestimmungseinrichtung K1, K2, KC stationär zu installieren. Eine zweite Methode ist die Positioniergenauigkeit des Roboters R1 zu nützen und den Sensor S entlang einer vorbestimmten Bahn präzise zu führen. Dies erfordert eine absolute Positioniergenauigkeit des Roboters, welche Roboter nach heutigem Stand der Technik nicht in ausreichendem Maße erreichen. Das erfindungsgemäße Verfahren ermöglicht eine dritte Variante.

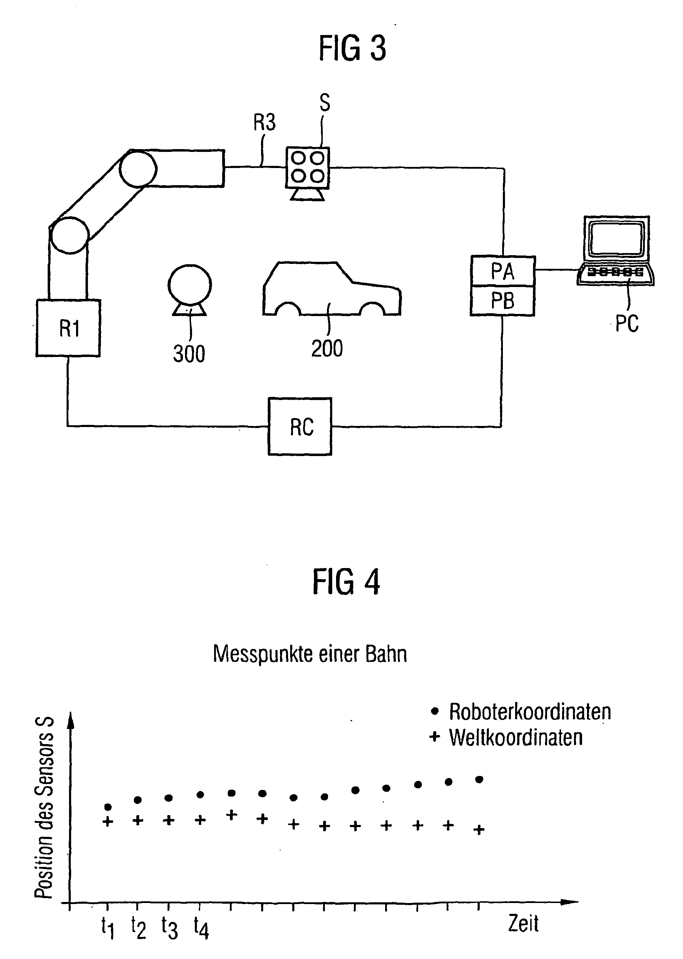

In Fig. 3 ist eine schematische Darstellung der Ausführungsform der vorliegenden Erfindung zum Vermessung eines Messobjektes 200. Die Ausführungsform der vorliegenden Erfindung nützt einen Roboter R1 mit einer sehr hohen Wiederholgenauigkeit durch eine Kompensation interner und/oder externer Einflüsse basierend auf wiederholtem Vermessen des Referenzkörpers 300. Dann muss man nur einmal präzise die Bahn des Sensors S bestimmen. Die Bahn legt man in geeigneter Form in einem Speicher ab und ruft sie für eine spätere Vermessung eines Messobjekts 200 wieder aus dem Speicher für die Verarbeitung der Messdaten des Sensors S ab, wobei der Sensor S für jedes Messobjekt 200 entlang der selben Bahn geführt wird.

Eine Zuordnung der Position und Orientierung des Sensors S zu den Messpunkten einer Bahn erfolgt mittels der Robotersteuerung RC. Dazu wird in der Ausführungsform der vorliegenden Erfindung die Bahn in einer Darstellung im Weltkoordinaten als auch im Roboterkoordinaten des Roboters R1 geeignet aufgezeichnet, und dieses Datenpaar wie in Fig. 4 als Kurve dargestellt abgespeichert. Die Robotersteuerung RC kann zu jedem Zeitpunkt ausgeben, wo sich der Sensor S im Roboterkoordinatensystem befindet. Die Sensorverarbeitungsvorrichtung PA fragt zu jedem Messpunkt des Sensors S die Bahn der Robotersteuerung RC ab und übersetzt sie mittels einer zuvor bestimmten Tabelle in das Weltkoordinatensystem. Diese Kurve kann aus diskreten Punkten bestehen oder ein Funktional darstellen, das durch eine geeignete Interpolation der Messpunkte gewonnen wird.

Eine unabdingbare Vorraussetzung für das erfindungsgemäße Verfahren ist, dass die Bahn präzise wiederholt wird. Dazu wird regelmäßig ein Kompensationsschritt ausgeführt, im Fall dieser Ausführungsform vor der Vermessung jedes weiteren Messobjekts 200. Dazu dient der Referenzkörper 300. Der Referenzkörper 300 wird regelmäßig vermessen. Der Referenzkörper 300 ist so aufgebaut, dass sich seine Abmessungen nicht verändern. Wird bei einer Vermessung des Referenzkörpers eine andere Punktwolke erhalten, als in einer ursprünglichen Vermessung, wird dies einzig auf Änderungen der Kinematik des Roboters R1 zurückgeführt. Die Kinematik des Roboters unterliegt sogenannten internen Einflüssen, wie z.B. Abnutzung der Gelenke, als auch externen Einflüssen, wie z.B. Veränderungen der Umgebungstemperatur, welche die Abmessungen des Roboters R1 beeinflussen. Wird eine Änderung der Kinematik detektiert, wird die Robotersteuerung RC so anpasst, dass der Sensor S wieder entlang der ursprünglichen Bahn geführt wird und die ursprüngliche Punktewolke des Referenzkörpers resultiert. Die Anpassung der Robotersteuerung RC kompensiert damit auch die Änderungen der Kinematik des Roboters R1 auf die Bahn um das Messobjekt 200.

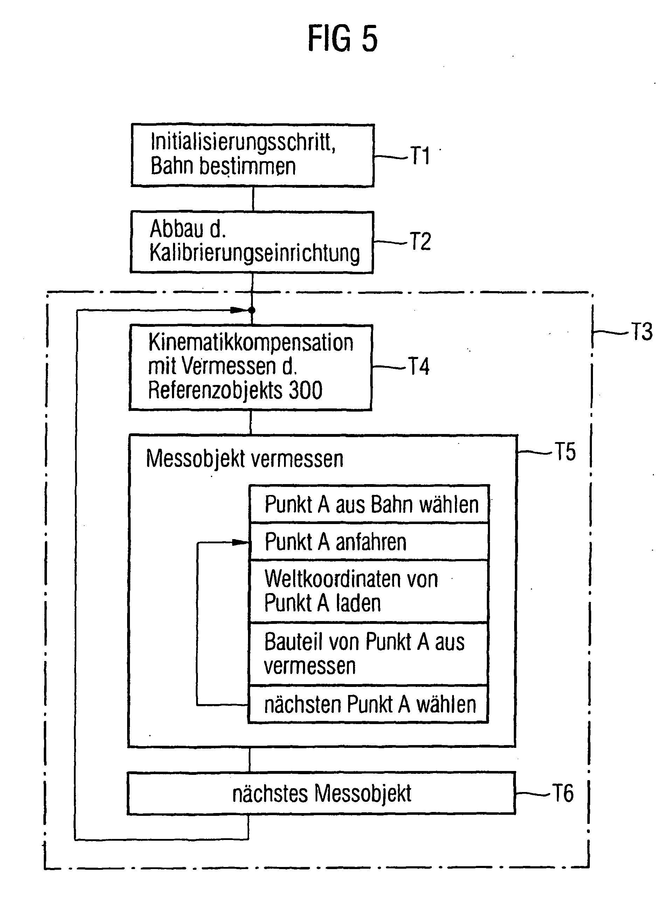

In Fig. 5 sind schematisch als Flussdiagramm Schritte der Ausführungsform der vorliegenden Erfindung zum robotergestützten Vermessen eines Messobjekts 200 dargestellt. In einem noch zu erläuterndem Initialisierungsphase T1 wird eine Ist-Bahn des robotergeführten Sensors S bestimmt und abgespeichert. Danach kann die Kalibrierungsvorrichtung K1, K2, KC zum Bestimmen der Bahnen des Sensors S abgebaut werden T2 und für weitere Roboter verwendet werden. Da diese Kalibrierungsvorrichtung sehr teuer ist, lohnt sich deren Mehrfachverwendung. Danach erfolgt die Messphase T3, innerhalb derer zuerst der Kinematikkompensationsschritt ausgeführt wird, so dass der Sensor S immer entlang derselben abgespeicherten Ist-Bahn geführt wird. Dann wird ein Messobjekt 200 vermessen T5 und dann ein nächstes Messobjekt 200 zum Vermessen bereitgestellt T6. Während des Schrittes T5 wird in einer Abfolge jeder Punkt der Ist-Bahn angefahren, zu jedem Punkt A der Ist-Bahn die Weltkoordinaten aus dem Speicher geladen und an dem Punkt A ein Messpunkt des Messobjekts aufgenommen, so dass die Punktewolke des Messobjekts 200 erhalten wird.

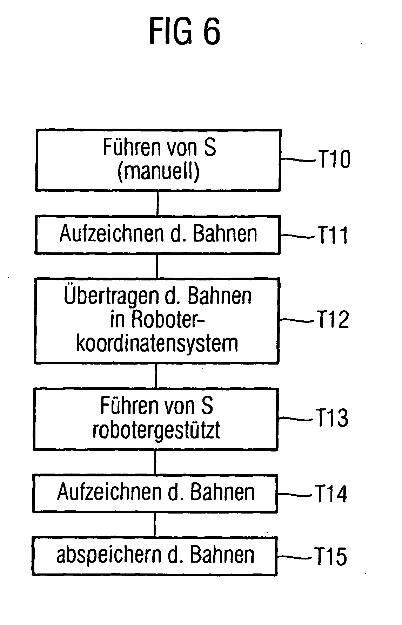

In Fig. 6 ist schematisch das Verfahren zum Bestimmen und Festlegen der Bahn als Flussdiagramm dargestellt, welches einer Initialisierungsphase T1 entspricht. Nach einem manuellem Führen des Sensors T10 und Aufzeichnen der Bahn des Sensors mit der Kalibrierungseinrichtung K1, K2, KC T11 wird die Bahn in das Roboterkoordinatensystem übertragen T12. Schwankungen des handgeführten Sensors S, welches bei der manuellen Führung mit aufgezeichnet wurde, kann durch Glätten der Bahn im Schritt T12 reduziert werden. Ansonsten soll die robotergeführte Bahn, soweit die Kinematik und der Aufbau des Roboters dies erlauben, der aufgezeichneten manuellen Bahn entsprechen. Im Schritt T13 wird der Sensor S robotergestützt geführt und die Ist-Bahn aufgezeichnet T14. Diese robotergeführte Ist-Bahn wird abgespeichert T15. Da der Roboter R1 eine verbesserte Wiederholgenauigkeit aufweist, wird diese Ist-Bahn nun bei nachfolgenden Führungen des Sensors mittels des Roboters R1 in sehr guter Übereinstimmung nachgefahren.

Obwohl die vorliegende Erfindung vorstehend anhand eines bevorzugten Ausführungsbeispiele beschrieben wurde, ist sie darauf nicht beschränkt, sondern auf vielfältige Art und Weise modifizierbar.

Die Beschreibung suggeriert die Verwendung eines optischen Sensors z.B. einer Videokamera. Die vorliegende Erfindung ist darauf nicht beschränkt, es können neben optischen auch induktive oder taktile Sensoren verwendet werden. Für die beiden letztgenannten Sensoren ist besonders die Möglichkeit einer absoluten Positionierbarkeit des Roboters von Vorteil.

### Bezugszeichenliste

- 200: Messobjekt
- 300: Referenzkörper
- S: Sensor
- PA: Sensorauswertungseinrichtung für S
- PB: Sensorsteuerungseinrichtung für S
- PC: Ausgabeterminal
- M: Markierungen
- K1,K2: Kameras
- KC: Kamerasteuerung- und Auswertungseinrichtungen
- R1: Roboter
- R3: Roboterflansch
- RC: Robotersteuerung

## Patentansprüche

1. Verfahren zur robotergestützten Vermessung von Messobjekten (200) mit den Schritten:
a) Festlegen der Bahnen eines Sensors (S) in einem Weltkoordinatensystem, welche zur Vermessung eines Objektes (200) notwendig sind;
b) Übertragen der Bahnen in eine Darstellung in einem Roboterkoordinatensystem eines Roboters (R1);
c) Bereitstellen einer externen Kalibrierungseinrichtung (KC, K1, K2);
d) Bestimmen der Ist-Bahnen des an dem Roboter (R1) geführten Sensors (S) in einem Weltkoordinatensystem mit der externen Kalibrierungseinrichtung (KC, K1, K2) und Aufzeichnen einer Tabelle mit den Ist-Bahnen und entsprechenden Bahnen;
e) robotergestütztes Vermessen einer Mehrzahl weiterer Messobjekte unter Verwendung des Roboters (R1) entlang der Ist-Bahnen wobei die Position und Orientierung des Sensors (S) in den Roboterkoordinaten zu jedem Messpunkt des Sensors (S) abgefragt und die Position und Orientierung in dem Roboterkoordinatensystem mittels der Tabelle in Weltkoordinaten übertragen werden;
f) wobei nach einer vorbestimmten Anzahl an Messvorgängen zum Kompensieren von externen und/oder internen Einflüssen zur Erhöhung der Wiederholgenauigkeit ein Referenzkörper (300) mit dem mit dem Roboter (R1) geführten Sensor (S) vermessen wird, und aus Abweichungen einer gemessenen Punktewolke zu einer vorhergehenden gemessenen Punktewolke des Referenzkörpers (300) eine Anpassung einer Robotersteuerung (RC) derart vorgenommen wird, dass die Änderungen der Kinematik des Roboters (R1) kompensiert werden, welche zu den verschiedenen Punktewolken führten; und
wobei die Schritte a) bis d) im Rahmen einer Initialisierungsphase und die Schritte e) und f) mehrfach im Rahmen einer Messphase durchgeführt werden und die Kalibrierungseinrichtung nach Beendigung der Initialisierungsphase entfernt werden kann.

2. Verfahren nach Anspruch 1, wobei die vorbestimmte Anzahl an Messvorgängen des Schrittes e) 1 ist.

3. Verfahren nach Anspruch 1 und 2, wobei das Festlegen der Bahnen des an dem Roboter geführten Sensors (S) durch die externe Kalibrierungseinrichtung erreicht wird (KC, K1, K2).

4. Verfahren nach Anspruch 3, wobei die externe Kalibrierungseinrichtung (KC, K1, K2) die Positionen von Markierungen (M) vermisst, welche fest oder lösbar angebracht an dem Sensor (S) angebracht sind.

5. Verfahren nach Anspruch 3 oder 4, wobei zum Festlegen der Bahnen des Sensors (S), das Messobjekt (200) vermessen wird, indem der Sensor (S) manuell geführt wird und die manuell geführte Bahnen des Sensors (S) während des Vermessens mit der externen Kalibrierungseinrichtung bestimmt wird.

6. Verfahren nach einem vorhergehenden Ansprüche, wobei zum Festlegen der Bahnen des Sensors (S) der Sensor (S) per Hand abgekoppelt vom Roboter (R1) oder per manueller Steuerung des Roboters (R1) um das Messobjekt (200) geführt wird.

7. Verfahren nach einem vorhergehenden Ansprüche, wobei zum Bestimmen der Bahnen des mit dem Roboter (R) geführten Sensors (S) und/oder Festlegen der Bahnen des Sensors (S) um den Referenzkörper (300), der Sensor (S) per Hand abgekoppelt vom Roboter (R1) oder per manueller Steuerung des Roboters (R1) um den Referenzkörper (300) geführt wird und die Ist-Bahnen mit der externen Positionsbestimmungseinrichtung (K1, K2, KC) aufgezeichnet werden.

8. Verfahren nach einem der vorhergehenden Ansprüche, wobei das Anpassen der bestimmten Ist-Bahnen des Sensors (S) an die festgelegten Bahnen des Sensors (S) durchgeführt wird.

## Claims

1. Method for the robot-supported measurement of objects of measurement (200), comprising the steps of:
a) determining the paths of a sensor (S) in a world coordinate system, which are necessary for measuring an object (200);
b) transforming the paths to a representation in a robot coordinate system of a robot (R1);
c) providing an external calibration device (KC, K1, K2);
d) detecting the actual paths of the sensor (S) guided on the robot (R1) in a world coordinate system by means of the external calibration device (KC, K1, K2) and recording a table with the actual paths and corresponding paths;
e) robot-supported measuring of a plurality of additional objects of measurement along the actual paths by using the robot (R1), wherein the position and orientation of the sensor (S) in the robot coordinates are scanned at each measuring point of the sensor (S) and the position and orientation in the robot coordinate system are transformed by means of the table to world coordinates;
f) wherein, after a predetermined number of measuring operations, for compensating external and/or internal influences to increase the repeatability, a reference body (300) is measured by the sensor (S) guided on the robot (R1), and an adjustment of a robot control (RC) is performed on the basis of deviations of a measured aggregate of points from a preceding measured aggregate of points of the reference body (300) to compensate the kinematic changes of the robot (R1) which led to the different aggregates of points; and
g) wherein steps a) to d) are performed in an initialization phase and steps e) and f) multiple times in a measuring phase, and the calibration device can be removed after the completion of the initialization phase.

2. Method according to claim 1, wherein the predetermined number of measuring operations of step f) is 1.

3. Method according to claim 1 and 2, wherein the determination of the paths of the sensor (S) guided on the robot is achieved by the external calibration device (KC, K1, K2).

4. Method according to claim 3, wherein the external calibration device (KC, K1, K2) measures the positions of marks (M) which are permanently or detachably fixed to the sensor (S).

5. Method according to claim 3 or 4, wherein for determining the paths of the sensor (S), the object of measurement (200) is measured by manually guiding the sensor (S) and by detecting the manually guided path of the sensor (S) during the measurement by the external calibration device.

6. Method according to one of the preceding claims, wherein for determining the paths of the sensor (S), the sensor (S) is guided around the object of measurement (200) manually, decoupled from the robot (R1), or by the manually controlled robot (R1).

7. Method according to one of the preceding claims, wherein for detecting the paths of the sensor (S) guided by the robot (R) and/or determining the paths of the sensor (S) around the reference body (300), the sensor (S) is guided around the reference body (300) manually, decoupled from the robot (R1), or by the manually controlled robot (R1), and the actual paths are recorded by the external position-detecting device (K1, K2, KC).

8. Method according to one of the preceding claims, wherein the adjustment of the detected actual paths of the sensor (S) to the determined paths of the sensor (S) is performed.

## Revendications

1. Procédé de mesure assistée par robot d'objets à mesurer (200), avec les étapes consistant à :
a) spécifier les trajectoires d'un capteur (S) dans un système de coordonnées universelles, lesquelles sont nécessaires à la mesure d'un objet (200) ;
b) transférer les trajectoires dans une représentation dans un système de coordonnées de robot d'un robot (R1) ;
c) mettre à disposition un dispositif de calibrage externe (KC, K1, K2) ;
d) déterminer les trajectoires réelles du capteur (S) guidé sur le robot (R1) dans un système de coordonnées universelles avec le dispositif de calibrage externe (KC, K1, K2) et enregistrer un tableau avec les trajectoires réelles et des trajectoires correspondantes ;
e) mesurer, en étant assisté par robot, une pluralité d'autres objets à mesurer en utilisant le robot (R1) le long des trajectoires réelles, la position et l'orientation du capteur (S) dans les coordonnées de robot étant demandées à chaque point de mesure du capteur (S) et la position et l'orientation dans le système de coordonnées de robot étant transférées au moyen du tableau en coordonnées universelles ;
f) après un nombre prédéterminé d'opérations de mesure, mesurer un corps de référence (300) avec le capteur (S) guidé avec le robot (R1) afin de compenser des influences externes et/ou internes pour augmenter la prévision de la reproductibilité et exécuter une adaptation d'une commande de robot (RC) à partir d'écarts entre un nuage de points mesuré et un nuage de points mesuré précédent du corps de référence (300) de telle façon à ce que les changements de la cinématique du robot (R1) qui conduisaient aux nuages de points différents ; soient compensés et
les étapes a) à d) étant exécutées dans le cadre d'une phase d'initialisation et les étapes e) et f) étant exécutées plusieurs fois dans le cadre d'une phase de mesure et le dispositif de calibrage pouvant être éloigné après la fin de la phase d'initialisation.

2. Procédé selon la revendication 1, selon lequel le nombre prédéterminé d'opérations de mesure de l'étape e) est égal à 1.

3. Procédé selon les revendications 1 et 2, selon lequel la spécification des trajectoires du capteur (S) guidé sur le robot est obtenue par le dispositif de calibrage externe (KC, K1, K2).

4. Procédé selon la revendication 3, selon lequel le dispositif de calibrage externe (KC, K1, K2) mesure les positions de repères (M) qui sont agencés de façon fixe ou amovible, apportés sur le capteur (S),

5. Procédé selon la revendication 3 ou 4, selon lequel, pour spécifier les trajectoires du capteur (S), l'objet à mesurer (200) est mesuré en guidant le capteur (S) manuellement et en déterminant les trajectoires guidées manuellement du capteur (S) pendant la mesure avec le dispositif de calibrage externe.

6. Procédé selon l'une des revendications précédentes, selon lequel, pour la spécification des trajectoires du capteur (S), le capteur (S) est guidé autour de l'objet à mesurer (200) soit à la main de manière découplée du robot (R1) soit par une commande manuelle du robot (R1).

7. Procédé selon l'une des revendications précédentes, selon lequel, pour spécifier les trajectoires du capteur (S) guidé avec le robot (R) et/ou pour spécifier les trajectoires du capteur (S) autour du corps de référence (300), le capteur (S) est guidé autour du corps de référence (300) soit à la main de manière découplée du robot (R1) soit par une commande manuelle du robot (R1) et les trajectoires réelles sont enregistrées avec le dispositif de détermination de position externe (K1, K2, KC).

8. Procédé selon l'une des revendications précédentes, selon lequel effectuée est l'adaptation des trajectoires réelles déterminées du capteur (S) aux trajectoires spécifiées du capteur (S).
